# EUROPÄISCHE PATENTSCHRIFT

(11) **EP 2 742 179 B1**
(45) Veröffentlichungstag und Bekanntmachung des Hinweises auf die Patenterteilung: **28.09.2016**
(21) Anmeldenummer: 12743893.5
(22) Anmeldetag: 01.08.2012
(51) Int. Cl.: D21F 1/00, B31F 5/00, D03D 13/00

(54) **ENDLOSER GEWEBEGURT**
ENDLESS FABRIC BELT
COURROIE TISSÉE SANS FIN

(30) Priorität: 11.08.2011 DE 102011110019
(43) Veröffentlichungstag der Anmeldung: 18.06.2014
(73) Patentinhaber: Mühlen Sohn GmbH & Co. KG, 89134 Blaustein (DE)
(72) Erfinder: MÜHLEN, Petra, 89134 Blaustein (DE)
(74) Vertreter: Jakelski & Althoff Patentanwälte PartG mbB
(86) Internationale Anmeldenummer: PCT/EP2012/003270
(87) Internationale Veröffentlichungsnummer: WO 2013/020667

(56) Entgegenhaltungen:
- EP-A1- 2 055 831
- DE-A1- 2 623 437
- DE-C1- 19 540 229
- US-A- 3 546 054
- US-A- 5 746 257

## Beschreibung

Die Erfindung betrifft einen Gewebegurt zur Herstellung einer Wellpappenbahn in einer Wellpappenmaschine nach dem Oberbegriff des Anspruchs 1.

Ein derartiger Gewebegurt ist aus der US 1,932,203 bekannt. Der Gewebegurt weist eine äußere, der Wellpappenbahn zugewandte Papierseite sowie eine innere Belastungsseite auf, auf der die Antriebskräfte in den Gurt eingeleitet werden. Zum Verbinden der Gurtenden zu einem Endlosgurt sind Verbindungsstücke vorgesehen, die aus einem Befestigungsstreifen mit Verbindungsklammern sowie einem Anschlussabschnitt bestehen, der als äußere Gewebebahn den Befestigungsstreifen umgibt. Die Gewebebahn des Anschlussabschnitts wird auf den Gurtenden aufgelegt und derart festgenäht, dass die Befestigungsstreifen eine Verlängerung des Gurtendes darstellen. Die im Befestigungsstreifen festgelegten Kupplungsklammern der gegenüberliegenden Enden greifen kammartig ineinander und werden durch einen Kupplungsstab kraftübertragend miteinander verbunden.

Die auf den Außenseiten des Gewebegurtes aufgenähten Gewebestreifen des Anschlussabschnitts führen zu einer Erhöhung der Dicke im Endbereich des Gurtes. Dieses ist sowohl auf der dem Antrieb zugeordneten Belastungsseite als auch auf der das Produkt tragenden Papierseite unerwünscht.

Aus der EP 2 055 831 A1 ist ein Gewebegurt bekannt, dessen Gurtenden in der Dicke reduziert werden, um Verbindungsstücke auszubilden. In diese dickenreduzierten Enden werden die Befestigungsklammern festgelegt und in bekannter Weise über einen Kupplungsstab in Längsrichtung des Gurtes kraftübertragend miteinander verbunden.

Um die Gurtverbindung herzustellen, müssen die Gurtenden umgeformt, in die umgeformten Enden die Klammern eingebracht und abschließend zum Höhenausgleich beflockt werden. Diese Art der Verbindung ist technisch aufwendig und benötigt lange Produktionszeiten.

Die US 5,746,257 beschreibt einen Gewebegurt an dem zum Verbinden der Gurtenden Verbindungsstücke vorgesehen sind, die jeweils an einem Ende quer zum Gurt eine Vielzahl von mit Abstand nebeneinander liegenden Ösen aufweisen. An einem gegenüberliegenden Ende sind sie mit einem Nahtband an dem zugeordneten Gurtende befestigt. In Längsrichtung des Gurtes wirken die Ösen des einen Verbindungsstückes mit den Ösen des anderen Verbindungsstückes kraftübertragend zusammen. Zwei Verbindungsstifte sind durch die Ösen der beiden Verbindungsstücke geschoben, um diese miteinander zu verbinden.

Die DE 26 23 427 A1 offenbart eine Nahtverbindung für breite und schwere Gewebe. Zwei Gewebestücke sind jeweils mit Ösen versehen. Sie werden über diese Ösen miteinander verbunden, indem ein Verbindungsstift durch die Ösen geführt wird. Um eine einfache Positionierung des Verbindungsstiftes zu ermöglichen, ist es vorgesehen, die beiden Gewebestücke zunächst mittels eines separaten Reißverschlusses miteinander zu verbinden, so dass die Ösen zusammengebracht werden. Nach Einbringen des Verbindungsstiftes in die Ösen kann der Reißverschluss entfernt werden.

Der Erfindung liegt die Aufgabe zugrunde, die Gurtenden eines Gewebegurtes in einfacher Weise zu einer hochbelastbaren, einfach zu öffnenden Verbindung zusammenzufügen.

Die Erfindung wird nach den kennzeichnenden Merkmalen des Anspruchs 1 gelöst.

Durch die Ausbildung eines Aufnahmespaltes zwischen der Papierseite und der Belastungsseite eines Gewebegurtes kann der Anschlussabschnitt des Verbindungsstücks in einfacher Weise mit dem Gewebegurt verbunden werden. Diese Verbindung liegt im Inneren des Gurtes und wird daher bei einem Verschleiß sowohl der Papierseite oder auch der Belastungsseite kaum in Mitleidenschaft gezogen.

Die kraftübertragende Verbindung zwischen den einander gegenüberliegenden Klammern der Gurtenden kann weiterhin einfach gelöst werden, so dass durch Öffnen des Endlosgurtes eine einfache Demontage von einer Wellpappenmaschine möglich ist.

Der Aufnahmespalt erstreckt sich etwa parallel zur Ebene des Gewebegurtes und liegt bevorzugt etwa mittig zwischen der Papierseite und der Belastungsseite. Diese symmetrische Anordnung gewährleistet eine Krafteinleitung in der Gurtmitte, d. h. in der Mittelebene des Gewebegurtes.

Es kann zweckmäßig sein, den Aufnahmespalt in einem größeren Abstand zu der Papierseite anzuordnen als zu der Belastungsseite. Wird z. B. ein großer Verschleiß auf der Papierseite erwartet, ist es zweckmäßig, den Aufnahmespalt in Richtung auf die Belastungsseite zu verlagern, so dass eine ausreichende Verschleißdicke auf der Papierseite zur Verfügung steht, ohne dass die Befestigung der Anschlussabschnitte in dem Aufnahmespalt des Gurtes beeinträchtigt wird. Die in Längsrichtung des Gurtes gemessene Tiefe des Aufnahmespaltes entspricht etwa einem Teil der Breite bis zur Breite des Gurtes.

Der Grundkörper eines Verbindungsstückes besteht zweckmäßig aus einem Gewebestreifen oder dergleichen Gebilde, der einen benachbart zu einer Längskante ausgebildeten Befestigungsstreifen für die Klammern aufweist. Der übrige Gewebestreifen kann dabei einen Anschlussabschnitt des Verbindungsstückes bilden. Bevorzugt besteht der Gewebestreifen aus dem gleichen oder einem ähnlichen Material wie das Gurtgewebe, um im Aufnahmespalt eine stoffschlüssige Verbindung durch z. B. Verschweißen des Anschlussabschnittes mit dem Gurtgewebe ausführen zu können. Hierzu bestehen zweckmäßig einige Fäden des Gurtgewebes aus einem Kunststoffmaterial, insbesondere aus Polyamid, Polyester oder dgl..

Die Höhe der Klammern ist vorteilhaft geringer als die Dicke des Gurtes ausgebildet, so dass zwischen den Klammern und den jeweiligen Gurtseiten ein Freiraum besteht, der durch Beflockung und dgl. zum Höhenausgleich ausgefüllt werden kann. Damit ist gewährleistet, dass die Klammern selbst mit Abstand sowohl zur Papierseite als auch zur Belastungsseite liegen.

Es kann auch zweckmäßig sein, die Klammern über einen Teil ihrer in Längsrichtung des Gurtes gemessenen Länge in den Aufnahmespalt zu legen. Dabei werden die Klammern von dem Gewebe des Gurtes abgedeckt. In einer vorteilhaften Ausgestaltung liegen die Klammern der Verbindungsstücke zumindest auf der Papierseite des Gurtes vollständig innerhalb des Aufnahmespaltes bzw. sind von einer Gewebewand des Aufnahmespaltes abgedeckt. Auf diese Weise kann z. B. auf der Papierseite gewährleistet werden, dass über die gesamte Länge des Endlosgurtes die Papierseite des Gurtgewebes unterbrechungsfrei ausgebildet ist.

In Weiterbildung der Erfindung bestehen die Klammern aus Kunststoff; kommen diese bei einem entsprechenden Verschleiß auf der Belastungsseite mit den antreibenden Bauteilen in Kontakt, sind mechanische Beschädigungen vermieden. Vorteilhaft können die Klammern von einer einteiligen Spirale gebildet sein.

Die Klammern sind als Glieder eines Reißverschlusses ausgebildet und werden über einen Schließer kraftübertragend ineinandergeschoben. Die ineinandergreifenden Glieder des Reißverschlusses bilden die kraftübertragende Verbindung zwischen den beiden Gurtenden.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
Fig. 1 eine Draufsicht auf den Verbindungsbereich eines Gurtes mit nach Art eines Reißverschlusses ineinandergreifenden Klammern,
Fig. 2 eine Ansicht auf den Verbindungsbereich in Richtung des Pfeils 7 in Fig. 1,
Fig. 3 eine Ansicht auf den Verbindungsbereich in Richtung des Pfeils 8 in Fig. 1,
Fig. 4 eine perspektivische Ansicht des Verbindungsbereichs in Fig. 1,
Fig. 5 eine weitere perspektivische Ansicht auf den Verbindungsbereich nach Fig. 1.

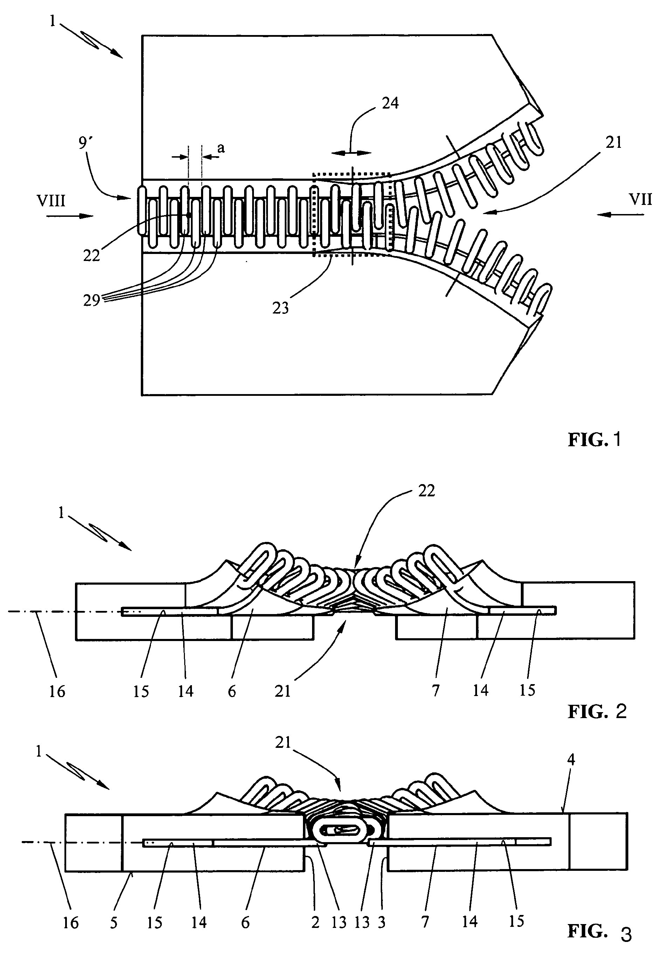

Der schematisch in Fig. 1 bis 5 dargestellte Gurt ist ein aus einer oder mehreren Gewebelagen gewebter Gewebegurt, wie er in der Papierfertigung, insbesondere der Wellpappenfertigung eingesetzt wird. Ein derartiger Gewebegurt 1 zur Herstellung einer Wellpappenbahn in einer Wellpappenmaschine muss an seinen beiden Enden 2, 3 zu einem Endlosgurt zusammengefügt werden. Dabei bildet der Endlosgurt eine äußere, der Wellpappenbahn zugewandte Papierseite 4 sowie eine innere Belastungsseite 5, auf der die Antriebskräfte in den Gurt eingeleitet werden. Das Produkt, z. B. eine Wellpappenbahn, liegt auf der Papierseite auf, während auf der Belastungsseite des umlaufenden Gurtes die antreibenden Trommeln kraftübertragend anliegen.

Zum Verbinden der Gurtenden 2 und 3 ist eine Kupplungseinrichtung aus zwei Verbindungsstücken 6 und 7 vorgesehen.

In einer zweckmäßigen Ausführungsform besteht ein Verbindungsstück 6, 7 aus einem Grundkörper, der aus einem Gewebestück bzw. aus einem Gewebestreifen gebildet ist. Der Gewebestreifen weist an seiner einen Längskante einen Befestigungsstreifen 13 auf, in dem eine Vielzahl von mit Abstand a (Fig. 6) nebeneinander liegenden Klammern 9' gehalten ist. Der übrige Gewebestreifen, der nicht den Befestigungsstreifen 13 bildet, stellt einen Anschlussabschnitt 14 des Verbindungsstückes dar. Der Befestigungsstreifen 13 erstreckt sich in einer Ausführungsform der Erfindung über die gesamte Breite des Gurtes 1; somit sind über die gesamte Breite des Gurtes 1 mit Abstand a nebeneinander liegende Klammern 9 vorgesehen.

Zweckmäßig entspricht der Anschlussabschnitt 14 quer zur Längsrichtung des Gurtes 1 der Breite des Befestigungsstreifens 13, erstreckt sich also wie dieser über die Breite des Gurtes 1.

Wie den Figuren 1 bis 5 zu entnehmen, ist in den Enden 2, 3 jeweils ein Aufnahmespalt 15 ausgebildet, der der Aufnahme des Anschlussabschnitts 14 eines Verbindungsstückes 6, 7 dient. Der Aufnahmespalt 15 kann vorteilhaft durch Spalten des Gewebes des Gurtendes ausgebildet werden. Der Aufnahmespalt 15 erstreckt sich in dem jeweiligen Ende 2, 3 ausgehend vom Gurtende 2, 3 zwischen der Papierseite 4 und der Belastungsseite 5. Zweckmäßig erstreckt sich der Aufnahmespalt 15 dabei etwa parallel zu der Ebene 16 (Fig. 2 und 3) des Gurtes 1. Dabei liegt der Aufnahmespalt in dem Ausführungsbeispiel nach den Figuren 1 bis 5 etwa mittig zwischen der Papierseite 4 und der Belastungsseite 5. Der Aufnahmespalt 15 ist somit symmetrisch zur Gurtebene 16 angeordnet und ausgebildet.

Um eine gute Verbindung zwischen dem Anschlussabschnitt 14 eines Verbindungsstückes 6, 7 und dem jeweiligen Gurtende 2, 3 zu erzielen, entspricht die in Längsrichtung des Gurtes 1 gemessene Tiefe des Aufnahmespalts 15 etwa einem Teil der Breite bis zur Breite des Gurtes 1. Zweckmäßig beträgt die Tiefe des Aufnahmespaltes 15 etwa 50% der Breite des Gurtes 1.

Zum Verbinden der Gurtenden 2 und 3 eines Gurtes 1 zu einem Endlosgurt wird in jedem Gurtende 2, 3 ein Verbindungsstück 6, 7 eingesetzt, wobei der Anschlussabschnitt 14 im Aufnahmespalt 15 befestigt ist. In besonderer Weise kann der in dem Aufnahmespalt 15 liegende Anschlussabschnitt 14 mit dem Gurt 1 vernietet, verschraubt, vernäht, verklebt, verschweißt oder in anderer geeigneter Weise mechanisch verbunden werden. Zum Verschweißen ist der Gewebestreifen des Verbindungsstücks 6, 7 aus einem geeigneten, bevorzugt einem gleichen Material wie das Gewebe des Gurtes 1 gefertigt. In einem Ausführungsbeispiel bestehen zumindest einige der Fäden des Gurtgewebes aus einem Kunststoffmaterial, insbesondere aus einem Polyamid, einem Polyester oder dgl. Material.

Sind die Anschlussabschnitte 14 in dem jeweiligen Aufnahmespalt 15 der Gurtenden 2, 3 fixiert, werden die Klammern kammartig ineinandergeschoben, so dass abwechselnd eine Klammer von dem Verbindungsstück 6 neben einer Klammer 9 von dem Verbindungsstück 7 liegt.

Wie die Figuren 2 und 3 zeigen, ist die Höhe der Klammer 9 bzw. der Spirale 19 geringer als die Dicke des Gurtes 1.

Die Klammern 9' können aus einem Draht gebildet sein; zweckmäßig bestehen die Klammern 9' aus Kunststoff.

Im Ausführungsbeispiel nach den Figuren 1 bis 5 sind die Klammern 9' als Glieder 29 eines Reißverschlusses ausgebildet. Die Glieder 29 des Reißverschlusses sind entsprechend den Klammern 9 an einem Befestigungsstreifen 13 festgelegt, der Teil eines das Verbindungsstück 6, 7 bildenden Gewebestreifens 11 ist.

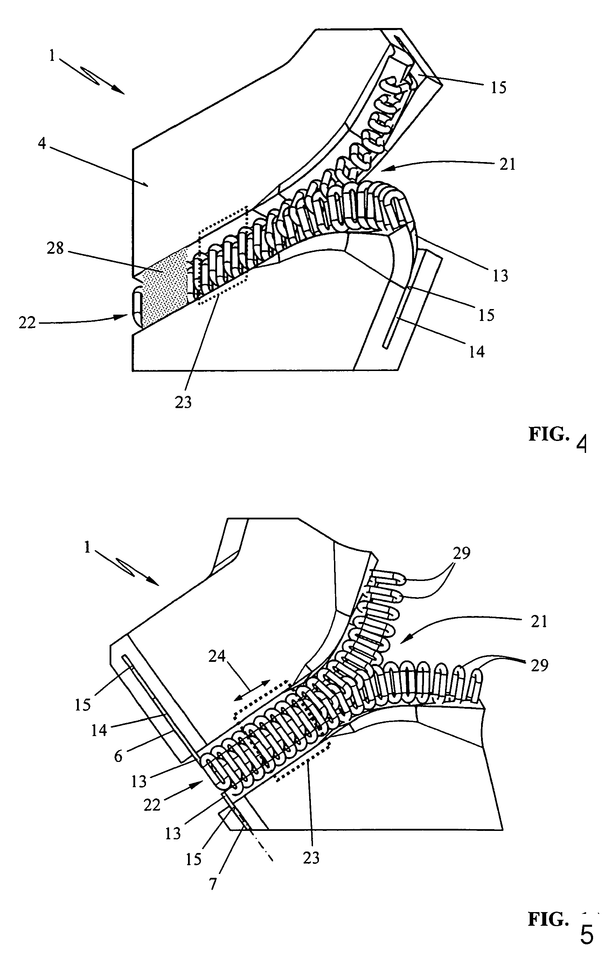

Über einen in den Figuren 1 und 5 angedeuteten Schließer 23 werden die Glieder 29 des Reißverschlusses kammartig ineinander verzahnt, wodurch die kräfteübertragende Verbindung zwischen den Gurtenden hergestellt ist. Der Verbindungsbereich 21 wird auf der Papierseite z. B. durch eine Beflockung 28 aus Polyesterflocken oder dgl. Material abgedeckt, wie in Fig. 9 schematisch dargestellt.

Der Schließer ist in Richtung des Doppelpfeils 24 quer zur Längsrichtung des Gurtes zu verschieben, wodurch die Glieder 29 des Reißverschlusses entweder kräfteübertragend ineinander verzahnt werden oder aber zum Lösen des Gurtes von der Wellpappenmaschine geöffnet werden.

Die Bildung des Aufnahmespaltes kann in einfacher Weise durch symmetrische oder asymmetrische Spaltung des Gurtendes 2 bzw. 3 erzielt werden. Dabei ist der den Anschlussabschnitt 14 bildende Gewebestreifen in seiner Dicke so dünn gehalten, dass er nach dem Einsetzen in den Aufnahmespalt 15 und dem Festlegen mit dem Gurt nicht zu einer Vergrößerung der Dicke des Gurtendes fuhrt. Im Ausführungsbeispiel beträgt die Dicke des Anschlussabschnitts 14 etwa 8% bis 15% der Dicke des Gewebegurtes 1. Da das Gurtende nach Einfügen des Anschlussabschnitts 14 in den Aufnahmespalt 15 auf die Dicke verpresst wird, ergibt sich keine Dickenvergrößerung im Bereich der Gurtenden 2 und 3.

## Patentansprüche

1. Gewebegurt zur Herstellung einer Wellpappenbahn in einer Wellpappenmaschine, wobei der Gurt (1) an seinen beiden Enden (2, 3) zu einem Endlosgurt zusammengefügt ist, und eine äußere, der Wellpappenbahn zugewandte Papierseite (4) sowie eine innere, dem Antrieb zugeordnete Belastungsseite (5) aufweist, wobei zum Verbinden der Gurtenden (2, 3) Verbindungsstücke (6, 7) vorgesehen sind, die jeweils an einem Ende (2, 3) quer zum Gurt (1) eine Vielzahl von mit Abstand (a) nebeneinander liegenden Klammern (9') aufweisen und an einem gegenüberliegenden Ende mit einem Anschlussabschnitt (14) an dem zugeordneten Gurtende (2, 3) festgelegt sind, wobei in Längsrichtung des Gurtes (1) die Klammern (9') des einen Verbindungsstückes (6) mit den Klammern (9') des anderen Verbindungsstückes (7) kraftübertragend zusammenwirken, wobei der Anschlussabschnitt (14) eines Verbindungsstückes (6, 7) in einem Aufnahmespalt (15) des Gurtes (1) gehalten ist, und sich der Aufnahmespalt (15) ausgehend vom Gurtende (2, 3) zwischen der Papierseite (4) und der Belastungsseite (5) erstreckt, **dadurch gekennzeichnet, dass** die Klammern (9') als Glieder (29) eines Reißverschlusses ausgebildet sind und zur Verbindung der Gurtenden (2, 3) kraftübertragend ineinandergreifen.

2. Gewebegurt nach Anspruch 1, **dadurch gekennzeichnet, dass** sich der Aufnahmespalt (15) etwa parallel zur Ebene (16) des Gewebegurtes (1) erstreckt.

3. Gewebegurt nach Anspruch 1 oder 2, **dadurch gekennzeichnet, dass** der Aufnahmespalt (15) etwa mittig zwischen der Papierseite (4) und der Belastungsseite (5) liegt.

4. Gewebegurt nach Anspruch 1 oder 2, **dadurch gekennzeichnet, dass** der Aufnahmespalt (15) in einem größeren Abstand zu der einen Papierseite (4) liegt als zu der Belastungsseite (5).

5. Gewebegurt nach einem der Ansprüche 1 bis 4, **dadurch gekennzeichnet, dass** die in Längsrichtung des Gurtes (1) gemessene Tiefe des Aufnahmespaltes (15) etwa einem Teil der Breite des Gurtes (1) entspricht.

6. Gewebegurt nach einem der Ansprüche 1 bis 5, **dadurch gekennzeichnet, dass** der Grundkörper (10) eines Verbindungsstückes (6, 7) aus einem Gewebestreifen besteht, der einen benachbart zu einer Längskante ausgebildeten Befestigungsstreifen (13) für die Klammern (9') aufweist und der übrige Gewebestreifen den Anschlussabschnitt (14) bildet.

7. Gewebegurt nach Anspruch 6, **dadurch gekennzeichnet, dass** der Gewebestreifen aus einem gleichen oder ähnlichen Material wie das Gewebe des Gurtes (1) gefertigt ist.

8. Gewebegurt nach einem der Ansprüche 1 bis 7, **dadurch gekennzeichnet, dass** der in dem Aufnahmespalt (15) liegende Anschlussabschnitt (14) des Verbindungsstückes (6, 7) mit dem Gurt (1) mechanisch verbunden ist, vorzugsweise durch Nieten, Schrauben, Nähen, Kleben oder Verschweissen .

9. Gewebegurt nach einem der Ansprüche 1 bis 8, **dadurch gekennzeichnet, dass** die Höhe (H) der Klammern (9, 9') gleich oder geringer ist als die Dicke (D) des Gurtes.

10. Gewebegurt nach Anspruch 9, **dadurch gekennzeichnet, dass** die Klammern (9') über einen Teil ihrer in Längsrichtung des Gurtes (1) gemessenen Länge in dem Aufnahmespalt (15) liegen.

11. Gewebegurt nach Anspruch 10, **dadurch gekennzeichnet, dass** die Klammern (9') der Verbindungsstücke (6, 7) auf der Papierseite (4) des Gurtes vollständig von dem Gewebe des Gurtes (1) abgedeckt sind.

12. Gewebegurt nach einem der Ansprüche 1 bis 11, **dadurch gekennzeichnet, dass** die Klammern (9') aus Kunststoff bestehen.

13. Gewebegurt nach einem der Ansprüche 1 bis 12, **dadurch gekennzeichnet, dass** die Klammern (9') eines Verbindungsstücks (6, 7) von einer Spirale gebildet sind.

14. Gewebegurt nach einem der Ansprüche 1 bis 13, **dadurch gekennzeichnet, dass** zumindest einige der Fäden des Gurtgewebes aus einem Kunststoffmaterial, insbesondere aus Polyester bestehen.

## Claims

1. Fabric belt for the production of a corrugated cardboard web in a corrugating machine, wherein the belt (1) is joined together at its two ends (2, 3) to form an endless belt, and has an outer paper side (4) facing the corrugated cardboard web and an inner load side (5) allocated to the drive, wherein connecting pieces (6, 7) are provided to connect the belt ends (2, 3), said connecting pieces each having a plurality of brackets (9'), which are adjacent to one another with spacing (a), on one end (2, 3) transverse to the belt (1) and being fixed with a connecting section (14) to the allocated belt end (2, 3) on an opposite end , wherein, in longitudinal direction of the belt (1), the brackets (9') of one connecting piece (6) interact with the brackets (9') of the other connecting piece (7) in a power transmitting manner, wherein the connecting section (14) of one connecting piece (6, 7) is held in a receiving gap (15) of the belt (1), and the receiving gap (15) extends from the belt end (2, 3) between the paper side (4) and the load side (5), **characterised in that** the brackets (9') are formed as links (29) of a zip fastener and engage with one another in a power transmitting manner for the connection of the belt ends (2, 3).

2. Fabric belt according to claim 1, **characterised in that** the receiving gap (15) extends approximately in parallel to the plane (16) of the fabric belt (1).

3. Fabric belt according to claim 1 or 2, **characterised in that** the receiving gap (15) is located approximately centrally between the paper side (4) and the load side (5).

4. Fabric belt according to claim 1 or 2, **characterised in that** the receiving gap (15) lies at greater distance from the one paper side (4) than from the load side (5).

5. Fabric belt according to one of claims 1 to 4, **characterised in that** depth of the receiving gap (15) measured in the longitudinal direction of the belt (1) corresponds approximately to a part of the width of the belt (1).

6. Fabric belt according to one of claims 1 to 5, **characterised in that** the base body (10) of a connecting piece (6, 7) consists of a fabric strip which has a fastening strip (13) for the brackets (9') formed adjacent to a longitudinal edge and the remaining fabric strip forms the connecting section (14).

7. Fabric belt according to claim 6, **characterised in that** the fabric strip is made from the same or a similar material to the fabric of the belt (1).

8. Fabric belt according to one of claims 1 to 7, **characterised in that** the connecting section (14) of the connecting piece (6, 7) located in the receiving gap (15) is mechanically connected to the belt (1), preferably by riveting, screwing, sewing, sticking or welding.

9. Fabric belt according to one of claims 1 to 8, **characterised in that** the height (H) of the brackets (9, 9') is equal to or lower than the thickness (D) of the belt.

10. Fabric belt according to claim 9, **characterised in that** the brackets (9') are located in the receiving gap (15) over a part of its length measured in the longitudinal direction of the belt (1).

11. Fabric belt according to claim 10, **characterised in that** the brackets (9') of the connecting pieces (6, 7) are completely covered on the paper side (4) of the belt by the fabric of the belt (1).

12. Fabric belt according to one of claims 1 to 11, **characterised in that** the brackets (9') consist of plastic.

13. Fabric belt according to one of claims 1 to 12, **characterised in that** the brackets (9') of a connecting piece (6, 7) are formed of a spiral.

14. Fabric belt according to one of claims 1 to 13, **characterised in that** at least some of the threads of the fabric belt consist of a plastic material, in particular polyester.

## Revendications

1. Courroie tissée pour réaliser une bande de carton ondulé dans une machine de carton ondulé,
la courroie (1) étant assemblée à ses deux extrémités (2, 3) pour former une courroie sans fin et ayant un côté papier (4) extérieur, tourné vers la bande de carton ondulé ainsi qu'un côté de charge (5), intérieur associé à l'entraînement,
- des pièces de raccord (6, 7) étant prévues pour relier les extrémités de courroie (2, 3) ces pièces ayant chacune à une extrémité (2, 3) transversale à la courroie (1), un ensemble de pinces (9') juxtaposées selon un intervalle (a) et l'extrémité opposée comportant un segment de raccord (14) à l'extrémité de courroie associée (2, 3),
- dans la direction longitudinale de la courroie (1), les pinces (9') d'une pièce de raccord (6) coopérant dans le sens de la transmission d'une force avec les pinces (9') de l'autre pièce de raccord (7),
- le segment de raccord (14) d'une pièce de raccord (6, 7) étant tenu dans la fissure réceptrice (15) de la courroie (1) et la fissure réceptrice (15) s'étendant à partir de l'extrémité de courroie (2, 3) entre le côté papier (4) et le côté charge (5),
courroie **caractérisée en ce que**
les pinces (9') sont réalisées sous la forme de maillons (29) d'une fermeture à glissière et interpénètrent dans le sens de la transmission d'une force pour relier les extrémités (2, 3) de la paroi.

2. Courroie tissée selon la revendication 1,
**caractérisée en ce que**
la fissure réceptrice (15) s'étend approximativement parallèlement au plan (16) de la courroie (1).

3. Courroie tissée selon la revendication 2,
**caractérisée en ce que**
la fissure réceptrice (15) est approximativement au milieu entre le côté papier (4) et le côté charge (5).

4. Courroie tissée selon la revendication 1 ou 2,
**caractérisée en ce que**
la fissure réceptrice (15) est à une distance plus grande du côté papier (4) que du côté charge (5).

5. Courroie tissée selon l'une des revendications 1 à 4,
**caractérisée en ce que**
la profondeur de la fissure réceptrice (15) mesurée dans la direction longitudinale de la courroie (1) correspond approximativement à une fraction de la largeur de la courroie.

6. Courroie tissée selon l'une des revendications 1 à 5,
**caractérisée en ce que**
le corps de base (10) d'une pièce de raccord (6, 7) est constitué par une bande tissée qui comporte des bandes de renforcement (13) pour les pinces (9') au voisinage d'une arête longitudinale, et par une autre bande tissée supplémentaires qui forme le segment de raccord (14).

7. Courroie tissée selon la revendication 6,
**caractérisée en ce que**
les bandes tissées sont réalisées dans la même matière ou une matière analogue à celle du tissage de la ceinture (1).

8. Courroie tissée selon l'une des revendications 1 à 7,
**caractérisée en ce que**
le segment de raccord (14) situé dans la fissure réceptrice (15) de la pièce de raccord (6, 7) est relié mécaniquement à la courroie (1), de préférence par rivetage, vissage, couture, collage ou soudage.

9. Courroie tissée selon l'une des revendications 1 à 8,
**caractérisée en ce que**
la hauteur (H) des pinces (9, 9') est égale ou inférieure à l'épaisseur (D) de la courroie.

10. Courroie tissée selon la revendication 9,
**caractérisée en ce que**
les pinces (9') se situent dans la fissure réceptrice (15) sur une partie de leur longueur mesurée dans la direction longitudinale de la courroie (1).

11. Courroie tissée selon la revendication 10,
**caractérisée en ce que**
les pinces (9') des pièces de raccord (6, 7) sont complètement couvertes par le tissus de la courroie (1) sur le côté papier (4) de la courroie.

12. Courroie tissée selon l'une des revendications 1 à 11,
**caractérisée en ce que**
les pinces (9') sont en matière plastique.

13. Courroie tissée selon l'une des revendications 1 à 12,
**caractérisée en ce que**
les pinces (9') d'une pièce de raccord (6, 7) sont formées par une spirale.

14. Courroie tissée selon l'une des revendications 1 à 13,
**caractérisée en ce qu'**
au moins certains fils du tissus de la courroie sont en une matière synthétique, notamment polyester.
